(19) Europäisches Patentamt
European Patent Office
Office européen des brevets

(11) **EP 3 835 341 A1**

(12) **EUROPEAN PATENT APPLICATION**
published in accordance with Art. 153(4) EPC

(43) Date of publication:
**16.06.2021 Bulletin 2021/24**

(21) Application number: **19847673.1**

(22) Date of filing: **25.07.2019**

(51) Int Cl.:
*C08J 5/06* (2006.01)   *B29B 15/08* (2006.01)
*C08J 11/12* (2006.01)   *D06M 15/55* (2006.01)
*D06M 101/40* (2006.01)

(86) International application number:
**PCT/JP2019/029165**

(87) International publication number:
**WO 2020/031713 (13.02.2020 Gazette 2020/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **06.08.2018 JP 2018147816**

(71) Applicant: **Kureha Ecology Management Co., Ltd.
Fukushima-ken 974-8232 (JP)**

(72) Inventors:
• **ICHIKAWA, Yukio
Iwaki-shi, Fukushima 974-8232 (JP)**

• **HIGASHIYAMA, Yukihiro
Tokyo 103-8552 (JP)**
• **MIYATA, Haruo
Iwaki-shi, Fukushima 974-8232 (JP)**
• **OGURA, Nobuo
Iwaki-shi, Fukushima 974-8232 (JP)**
• **NAMEKAWA, Akio
Iwaki-shi, Fukushima 974-8232 (JP)**
• **KAWAGUCHI, Susumu
Iwaki-shi, Fukushima 974-8232 (JP)**

(74) Representative: **Hoefer & Partner Patentanwälte
mbB
Pilgersheimer Straße 20
81543 München (DE)**

(54) **REINFORCING MATERIAL WITH COATING LAYER AND METHOD FOR PRODUCING
REINFORCING MATERIAL WITH COATING LAYER**

(57)    Provided is a reinforcing material having high interfacial adhesion with a matrix resin. The reinforcing material containing a covering layer according to an embodiment of the present invention includes a reinforcing material that imparts strength to a matrix resin by being combined with the matrix resin, and a covering layer formed on a surface of the reinforcing material, in which the covering layer is formed of a vaporized material generated by heating the resin.

FIG. 1

**Description**

**[TECHNICAL FIELD]**

The present invention relates to a reinforcing material containing a covering layer and a method of producing a reinforcing material containing a covering layer, and more particularly relates to a reinforcing material containing a covering layer that imparts strength to a matrix resin and a method of producing the same.

**[BACKGROUND ART]**

Since a fiber reinforced resin composite material, which is a composite material in which a matrix resin is reinforced by fibers, has excellent strength and elastic modulus, and has a large degree of freedom in design, in recent years, it has been used as a structural material in various fields as a metal replacement material.

In carbon fiber reinforced plastic (CFRP), which is an example of a fiber reinforced resin composite material, carbon fibers (CF) used in CFRP have been developed in order to produce structural materials having higher performance (Patent Document 1).

[Citation List]

[Patent Document]

Patent Document 1: JP 58-31430 B

**[SUMMARY OF INVENTION]**

[Technical Problem]

Here, in CFRP, as one of the factors for determining mechanical physical properties, interfacial adhesion between a carbon fiber and a matrix resin has been known. When the interfacial adhesion between the carbon fiber and the matrix resin is good, the interfacial adhesion strength becomes strong, and the mechanical properties become strong when CFRP is used. Therefore, in order to improve the interfacial adhesion between the carbon fiber and the matrix resin, commercially available carbon fibers are generally subjected to a surface treatment such as applying a surface covering agent to the surface of carbon fiber.

However, in a case where the carbon fibers of CFRP are recycled, in a step of recovering the carbon fibers from CFRP, in order to completely remove the matrix resin from the carbon fibers, it is necessary to perform a heat treatment at a temperature of approximately 500°C or higher in a case where the matrix resin is an epoxy resin. Here, when such a heat treatment is performed, the surface covering agent applied to the carbon fiber is also removed. As a result, the carbon fiber after the heat treatment has a problem in that the adhesiveness with the matrix resin is lowered.

Further, in addition to recycling carbon fibers of CFRP, the adhesiveness to the matrix resin may be insufficient even in commercially available carbon fibers, that is, a so-called virgin product, that have undergone a surface treatment or the like.

Therefore, the present invention is made in view of the above problem, and intended to provide a reinforcing material having high interfacial adhesion with the matrix resin.

[Solution to Problem]

In order to solve the problems described above, a reinforcing material containing a covering layer according to one aspect of the present invention includes a reinforcing material that imparts strength to a matrix resin by being combined with the matrix resin, and a covering layer formed on a surface of the reinforcing material, in which the covering layer is formed of a vaporized material generated by heating the resin.

In order to solve the problems described above, a method of producing a reinforcing material containing a covering layer according to one aspect of the present invention includes a step of heating a resin to generate a vaporized material and a step of bringing the vaporized material into contact with a reinforcing material in the absence of superheated steam to form a covering layer on a surface of the reinforcing material.

In order to solve the problems described above, a method of producing a reinforcing material containing a covering layer according to one aspect of the present invention includes a heating step of heating a molded article containing a resin and a reinforcing material to remove the resin and perform a heat treatment, thus obtaining the reinforcing material having the resin removed; a recovering step of recovering a vaporized material of the resin produced in the heating step; and a forming step of bringing the vaporized material into contact with the reinforcing material obtained in the heating step in the absence of superheated steam to form a covering layer on a surface of the reinforcing material.

In order to solve the problems described above, an apparatus for producing a reinforcing material containing a covering layer according to one aspect of the present invention includes a heating unit that heats a molded article containing a resin and a reinforcing material to remove the resin and perform a heat treatment, thus obtaining the reinforcing material having the resin removed; a recovery unit that recovers a vaporized material of the resin produced when the resin is subjected to a heat treatment to be removed; and a covering layer forming unit that brings the vaporized material into contact with the reinforcing material obtained in the heating unit in the absence of superheated steam to form a covering layer on a surface of the reinforcing material.

[Advantageous Effects of Invention]

According to one aspect of the present invention, a reinforcing material having high interfacial adhesion with a matrix resin can be provided.

**[BRIEF DESCRIPTION OF DRAWINGS]**

FIG. 1 is a schematic view illustrating one example of a producing apparatus according to an embodiment of the present invention.

FIG. 2 is a schematic view illustrating one example of a producing apparatus according to an embodiment of the present invention.

FIG. 3 is a view schematically illustrating a method for measuring interfacial shear strength.

[Description of Embodiments]

Hereinafter, an embodiment of a reinforcing material containing a covering layer according to an embodiment of the present invention will be described below.

[Reinforcing material containing covering layer]

A reinforcing material containing a covering layer according to the present embodiment is a reinforcing material that imparts strength to the matrix resin by being combined with a matrix resin, and has a covering layer formed on the surface thereof. By forming the covering layer on the surface of the reinforcing material, the reinforcing material containing a covering layer according to the present embodiment improves the interfacial adhesion between the reinforcing material and the matrix resin and improves the interfacial adhesion strength.

(Reinforcing material)

A reinforcing material in the present embodiment is a reinforcing material that imparts strength to the matrix resin by being combined with a matrix resin. The material of the reinforcing material can be appropriately selected by use of a composite material containing a matrix resin and a reinforcing material (hereinafter, also simply referred to as a composite material). Examples of the reinforcing material include inorganic reinforcing materials such as glass fibers, carbon fibers, boron fibers, metal fibers, alumina fibers, SiC fibers, Kevlar fibers, calcium carbonate particles, glass beads, silica, zinc oxide, and titanium oxide, and organic reinforcing materials such as aramid fibers. Among these, the reinforcing material is preferably an inorganic reinforcing material, and is more preferably glass fibers, carbon fibers, metal fibers, or calcium carbonate particles.

The shape of the reinforcing material of the present embodiment is not particularly limited, and may be, for example, a spherical shape, a flat plate shape, a fibrous shape, and a needle shape. Among these, the shape of the reinforcing material is more preferably fibrous. In the case of fibrous shape, a continuous yarn or a discontinuous yarn may be used.

(Covering layer)

A covering layer formed on the surface of the reinforcing material is formed by vapor-depositing a vaporized material generated by pyrolyzing the resin on the surface of the reinforcing material. The resin for forming the covering layer is not particularly limited as long as it can be partially decomposed by heating and the vaporized material can be vapor-deposited on the surface of the reinforcing material. Here, "partially decomposed" is intended to be randomly decomposed. Further, in the specification of the present application, "random decomposition" means decomposition that is not depolymerization type decomposition.

Examples of the resin in the present embodiment include an olefin resin such as polyethylene and polypropylene; a polyamide resin such as nylon; an epoxy resin; an unsaturated polyester resin; a vinyl ester resin; a phenolic resin; a cyanate ester resin; a polyimide resin; a polyetherimide resin; polyethylene terephthalate (PET), polybutylene terephthalate (PBT), polycarbonate (PC) and a polyester resin such as polycaprolactone; a sulfonic resin such as polysulfone, polyethersulfone, and polyphenylsulfone; a sulfide resin such as polyphenylene sulfide; an aromatic polyether ketone resin such as polyether ether ketone and polyether ketone; a polyarylate resin; and a polyamide-imide resin. In the present embodiment, the resin is more preferably an epoxy resin.

(Method of producing reinforcing material containing covering layer)

A method of producing a reinforcing material containing a covering layer will be described below. The producing method in the present embodiment includes a heating step of heating a resin to generate a vaporized material, and a covering layer forming step (forming step) of bringing the vaporized material into contact with a reinforcing material to form a covering layer. Note that, according to the producing method of the present embodiment, the reinforcing material containing a covering layer can be produced using a resin (matrix resin) contained in a molded article of a composite material containing a matrix resin and a reinforcing material. In other words, any of the resin and the reinforcing material contained in the molded article can be recycled and used. In the following, an example is given of a case in which the molded article of the composite material is recycled to produce a reinforcing material containing a covering layer, but the present invention is not limited to this example. For example, as illustrated in examples described below, a reinforcing material containing a covering layer may be produced using a separately prepared resin and reinforcing material.

In addition, the reinforcing material in the form of a continuous yarn may be continuously supplied to the covering layer forming step to produce the reinforcing material containing a covering layer.

(Heating step)

In a heating step, a molded article formed of a composite material containing a resin and a reinforcing material is heated, and the resin is subjected to thermolysis to generate a vaporized material of the resin. Since it is a vaporized material generated by performing the thermolysis on the resin, the "vaporized material of the resin" is actually a vaporized material of the resin decomposed material. However, in the present specification, the vaporized material generated due to decomposition of the resin is referred to as the "vaporized material of the resin".

The molded article subjected to the heating step is not particularly limited as long as it is formed of a composite material containing a resin and a reinforcing material, and examples thereof include reinforced plastics and prepregs.

Examples of a method of performing thermolysis on a resin to generate a vaporized material include a method of performing thermolysis and vaporization on the resin by heating without using superheated steam, and a method of performing thermolysis and vaporization on the resin by heating using the superheated steam. From the perspective of being able to simplify an apparatus configuration and use of an inexpensive apparatus material, a technique of performing the thermolysis by heating without using the superheated steam is preferable.

In a case where the superheated steam is not used, the heating is preferably performed in an atmosphere of air or in the presence of dry nitrogen or in the presence of dry oxygen.

The heating temperature may be any temperature as long as the resin is randomly decomposed to generate a vaporized material, and differs depending on the resin to be used. However, a heating temperature T is preferably $T_1 \leq T \leq 1000$ in a case where 3% thermal weight reduction temperature $T_1$ of the resin to be used is lower than 300°C. The heating temperature T is preferably $(T_1-(T_1-300)/3) \leq T \leq 1000$ when the 3% thermogravimetric reduction temperature $T_1$ of the resin to be used is lower than 300°C. For example, in a case where the resin to be used is an epoxy resin, it is heated to a temperature of 500°C or higher.

Note that the vaporized material generated in the heating step is not all used to form the covering layer, and only the vaporized material at a temperature suitable for use in the chemical vapor deposition (CVD method) is used. For example, only the vaporized material generated by heating in a predetermined temperature range is recovered, and then the resin remaining on the molded article side is further decomposed by heating at a temperature equal to or higher than the predetermined temperature range, so that the resin is completely removed. The vaporized material generated when heated at a temperature equal to or higher than the predetermined temperature range may be treated as exhaust gas. Similarly, the vaporized material generated before reaching the predetermined temperature range may also be treated as exhaust gas.

In the heating step, the resin in the molded article of the composite material is completely subjected to the thermolysis to remove the resin from the molded article, and as a result, the reinforcing material is recovered. The reinforcing material obtained by this is used as a reinforcing material that is a material of the reinforcing material containing a covering layer.

(Recovering step)

As described above, in the present embodiment, after heating the molded article to generate the vaporized material of the resin, the temperature is further raised and heated to completely remove the resin in order to obtain a reinforcing material from which the resin has been completely removed. As a result, the vaporized material of the resin is once recovered, and the recovered vaporized material is sent to an apparatus or a section where the vaporized material and the reinforcing material are brought into contact with each other. For example, the device or section for performing the heating step to generate the vaporized material and the device or section for performing the covering layer formation may be connected by a pipe, and the vaporized material may be sent by a suction device. Note that a flow rate of the vaporized material can be controlled by providing a control valve on the pipe connecting the device or section that performs the heating step to generate the vaporized material and the device or section that performs the covering layer formation, and by adjusting the degree of opening of the control valve. Further, in order to prevent the vaporized material from condensing in the pipe, it is preferable to control the temperature of the pipe by a temperature control device. By preventing the condensation of the vaporized material, it is possible to prevent a raw material for forming a covering layer from being reduced.

(Covering layer forming step)

In the covering layer forming step, the reinforcing material obtained by removing the resin and the vaporized material of the recovered resin are brought into contact with each other, and the vaporized material is vapor-deposited on the reinforcing material to form a covering layer on the surface of the reinforcing material. Specifically, the recovered vaporized material is brought into contact with the reinforcing material, and a covering layer is formed on the surface of the reinforcing material by chemical vapor deposition (CVD).

In the covering layer forming step in the present embodiment, the reinforcing material and the vaporized material of the resin are brought into contact with each other in the absence of superheated steam. In the present specification, "in the absence of superheated steam" is intended not to actively supply superheated steam when the reinforcing material and the vaporized material are brought into contact with each other, and it does not require a situation where the superheated steam is completely absent. That is, in a case where the resin is decomposed using the superheated steam in the heating step described above, it is assumed that the superheated steam is mixed with the vaporized material. In this case, when the covering layer is formed using this vaporized material, it is assumed that the superheated steam is included in a space where the covering layer forming step is performed. In such a case, it is not excluded.

In the covering layer forming step in the present embodiment, by making contact between the reinforcing material and the vaporized material of the resin in the absence of superheated steam, it is possible to suppress the deterioration of the reinforcing material by the superheated steam acting on the reinforcing material. In addition, decomposition of the vaporized material of the resin due to the superheated steam can be suppressed, and the vaporized material of the resin can be suitably used to form the reinforcing material covering film.

As described above, it is possible to obtain a reinforcing material containing a covering layer in which a covering layer derived from a resin decomposed material is formed on the surface of the reinforcing material. The reinforcing material containing a covering layer is provided with the covering layer derived from the resin decomposed material on the surface, so that the interfacial adhesion with the matrix resin when the composite material is formed is excellent, and a composite material molded article having high strength can be obtained. Furthermore, according to the producing method according to the present embodiment, since the reinforcing material and the resin that form the molded article are recycled and used, productivity is excellent.

(Apparatus for producing reinforcing material containing covering layer)

The apparatus for producing a reinforcing material containing a covering layer according to the present embodiment includes a heating unit, a recovery unit, and a covering layer forming unit. As long as it has the above configuration, other configurations of the producing apparatus are not particularly limited. Here, the heating unit is an apparatus configuration unit that heats a molded article containing a resin and a reinforcing material to vaporize the resin to remove the resin, and obtain the reinforcing material having the resin removed. In addition, the recovery unit is an apparatus configuration unit that recovers the vaporized material of the resin produced by heating. In addition, the covering layer forming unit is an apparatus configuration unit that brings the recovered vaporized material into contact with the reinforcing material to form the covering layer on the surface of the reinforcing material.

Examples of the apparatus for producing the reinforcing material containing a covering layer include a producing apparatus that uses a muffle furnace and a producing apparatus that uses a tunnel furnace or kiln furnace. In addition, it may be a producing apparatus in which a plurality of furnaces are connected.

[First aspect]

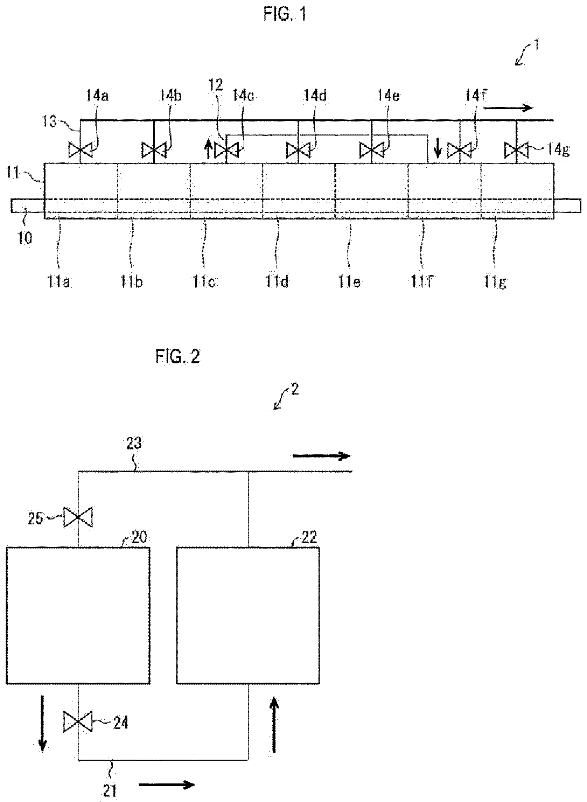

As a first aspect of the producing apparatus, an apparatus for producing a reinforcing material containing a covering layer using a tunnel furnace will be described with reference to FIG. 1. In the present aspect, a case in which the resin and the reinforcing material are recycled is described as an example by processing the molded article of the composite material. FIG. 1 is a schematic view illustrating an example of an apparatus for producing a reinforcing material containing a covering layer according to the present embodiment.

As illustrated in FIG. 1, a producing apparatus 1 includes a transport device 10, a tunnel furnace (heating unit, covering layer forming unit) 11, a recovery line (recovery unit) 12, and an exhaust gas path 13.

The transport device 10 is a device that sequentially moves the molded article from an inlet to an outlet in the tunnel furnace 11. The transport device 10 in the present embodiment uses a belt conveyor.

The tunnel furnace 11 is a tunnel type furnace and heats the transported molded article. The inside of the tunnel furnace 11 is divided into a plurality of sections 11a to 11g in order from the inlet side. The temperature of the sections 11a to 11g is set to change stepwise. Further, the sections 11a to 11g can control the temperature stepwise along a movement direction therein. For example, in one aspect, the section 11a is adjusted to room temperature to 100°C, the section 11b is adjusted to 100°C to 400°C, the section 11c is adjusted to 400°C to 500°C, the section 11d is adjusted to 500°C to 600°C, the section 11e is adjusted to 600°C to 500°C, the section 11f is adjusted to 500°C, and the section 11g is adjusted to 500°C to room temperature. A divider is provided between sections to prevent a vapor phase from moving between the sections.

The section 11c and the section 11f are connected to each other via a recovery line 12. A control valve 14c is placed between the section 11c and the recovery line 12. By operating the opening and closing of the control valve 14c, the flow of the vaporized material in the section 11c via the recovery line 12 (arrow illustrated next to the recovery line 12 in FIG. 1) can be adjusted. Moreover, each of the sections other than the section 11c is connected to the exhaust gas path 13.

The exhaust gas path 13 discharges exhaust gas from each of the sections by suctioning using a suction device (not illustrated) such as a fan. In addition, the control valves 14a, 14b, and 14d to 14g are placed between each section excluding the section 11c and the exhaust gas path 13. By operating the opening and closing of each control valve, the flow of exhaust gas (arrow illustrated next to the exhaust gas path 13 in FIG. 1) can be adjusted.

Hereinafter, the flow in a case where the producing apparatus 1 is used will be described.

The temperature of the tunnel furnace 11 is set in accordance with the molded article containing the resin and the reinforcing material used in the production. After setting the temperature of the tunnel furnace 11, the molded article containing the resin and the reinforcing material is installed in the transport device 10, and transported into the tunnel furnace 11 to start heating. The vaporized material of the resin generated in the sections 11a and 11b, which is the section in the vicinity of the inlet and is set to a relatively low temperature, is not recovered and is discharged from the exhaust gas path 13 to the outside of the producing apparatus 1. Further, as the transport proceeds, the molded article reaches the section 11c in the tunnel furnace 11. In the section 11c, the temperature at which the vaporized material of the resin suitable for CVD is produced is controlled. The vaporized material generated in the section 11c is fed to the section 11f located in the subsequent stage via the recovery line 12. Further, as the transport proceeds, the molded article reaches the section 11d. Here, the molded article is heated here at a higher temperature. As a result, the resin of the molded article is decomposed, the resin is completely removed, and only the reinforcing material remains. After that, the temperature is gradually lowered in the section 11e to reach the section 11f. Note that, the vaporized material of the resin generated in the section 11d and the section 11e is not recovered and is discharged from the exhaust gas path 13 to the outside of the producing apparatus 1. When the reinforcing material having the resin removed reaches the section 11f, the vaporized material of the resin is fed from the section 11c, and the vaporized material is vapor-deposited on the reinforcing material in the section 11c. As a result, the reinforcing material containing a covering layer, on which the covering layer is formed, is formed. The reinforcing material containing a covering layer is transported to the section 11g, is gradually returned to room temperature in the section 11g, and is removed from the outlet of the producing apparatus 1.

Although the tunnel furnace 11 is divided into the sections 11a to 11g in FIG. 1, the producing apparatus 1 of the present embodiment is not limited thereto, and the number of sections in the tunnel furnace 11 may be changed. In addition, the set temperature of each of the sections 11a to 11g of the tunnel furnace 11 is set in accordance with the resin contained in the molded article. Further, the tunnel furnace 11 may be provided with shutters at the inlet and outlet of the tunnel furnace, and may be configured to open and close the shutters when the molded article is transported.

Further, the tunnel furnace 11 may be provided with shutters between the sections 11a to 11g, and may be configured to open and close the shutters when the molded article is transported.

The exhaust gas discharged from the exhaust gas path 13 can be reused as a combustible gas. In addition, by installing a heat recovery device (not shown) in the exhaust gas path 13, the heat can be recovered from the exhaust gas discharged from the exhaust gas path 13 and reused.

[Second aspect]

As a second aspect of the producing apparatus, an apparatus for producing a reinforcing material containing a covering layer in which a plurality of furnaces are connected will be described with reference to FIG. 2. FIG. 2 is a schematic view illustrating an example of an apparatus for producing a reinforcing material containing a covering layer according to the present embodiment.

As illustrated in FIG. 2, the producing apparatus 2 includes a resin heating furnace (heating unit) 20, a recovery line (recovery unit) 21, a covering layer forming furnace (covering layer forming unit) 22, an exhaust gas path 23, a valve 24, and a valve 25.

The resin heating furnace 20 generates a vaporized material of a resin by heating the resin placed in the furnace. The temperature of the resin heating furnace 20 is set according to the resin to be used.

The recovery line 21 is a line connecting the resin heating furnace 20 and the covering layer forming furnace 22, and is a line for collecting the vaporized material of the resin generated in the resin heating furnace 20, and feeding the vaporized material of the resin into the covering layer forming furnace 22.

A reinforcing material that forms a covering layer in advance is introduced into the covering layer forming furnace 22. In the covering layer forming furnace 22, the covering layer is formed on the surface of the reinforcing material by bringing the reinforcing material to contact with the vaporized material of the resin recovered from the resin heating furnace 20 in the absence of superheated steam. The temperature of the covering layer forming furnace 22 is set in accordance with the resin and the reinforcing material to be used.

The exhaust gas path 23 is a line for recovering the exhaust gas generated in the resin heating furnace 20 and the covering layer forming furnace 22. The exhaust gas recovered in the exhaust gas path 23 can be processed in the same manner as the producing apparatus using the tunnel furnace described above.

The valve 24 is provided on the recovery line 21 that is connected to the resin heating furnace 20. In addition, the valve 25 is provided on the exhaust gas path 23 connected to the resin heating furnace 20. In a case where the temperature in the furnace of the resin heating furnace 20 is in a temperature range where the vaporized material used for CVD is generated, the valve 24 is opened and the valve 25 is closed. As a result, the vaporized material of the resin generated in the resin heating furnace 20 is fed into the covering layer forming furnace 22 (arrow illustrated next to the recovery line 21 in FIG. 2). On the other hand, in a case where the temperature in the furnace of the resin heating furnace 20 is outside the temperature range where the vaporized material used for CVD is generated, the valve 24 is closed and the valve 25 is opened. As a result, the exhaust gas generated in the resin heating furnace 20 is discharged via the exhaust gas path 23 (arrow illustrated next to the exhaust gas path 23 in FIG. 2).

Note that, instead of the resin heating furnace 20, the producing apparatus 2 may be provided with a reinforcing material recovery furnace such as the tunnel furnace described above. In a case of a configuration of including the reinforcing material recovery furnace, a section where a line for recovering the vaporized material for CVD in the tunnel furnace is connected to the covering layer forming furnace 22 via the recovery line 21, and other sections are connected to the exhaust gas path 23. As a result, the valves 24 and 25 are not required in the producing apparatus 2.

In the producing apparatus 2, the resin contained in the molded article can be reused by using the resin to be heated in the resin heating furnace 20 as a molded article of the composite material. In addition, in a case where the molded article of the composite material is used as a resin, the reinforcing material obtained by completely removing the resin in the resin heating furnace 20 can be used as a reinforcing material that forms the covering layer in another cycle. As a result, the reinforcing material contained in the molded article can be reused.

As a different aspect, the covering layer forming furnace 22 may also serve as the resin heating furnace 20. In this case, the reinforcing material and the covering layer forming resin are placed in the covering layer forming furnace 22, and the vaporized material is discharged from the exhaust gas path 23 outside the temperature range where the vaporized material used for CVD is generated. Then, the vaporized material is kept in the covering layer forming furnace 22 in the temperature range where the vaporized material used for CVD is generated. As a result, a covering layer can be formed on the reinforcing material even in a case where a single furnace is used.

[Summary]

The reinforcing material containing a covering layer according to an embodiment of the present invention includes a reinforcing material that imparts strength to a matrix resin by being combined with the matrix resin, and a covering layer formed on a surface of the reinforcing material, in which the covering layer is formed of a vaporized material generated by heating the resin.

In the reinforcing material containing a covering layer according to an embodiment of the present invention, the reinforcing material preferably has a spherical shape, a flat plate shape, a fibrous shape, or a needle shape.

In the reinforcing material containing a covering layer according to an embodiment of the present invention, the reinforcing material is preferably an inorganic material.

In the reinforcing material containing a covering layer according to an embodiment of the present invention, the reinforcing material is more preferably a carbon fiber.

In the reinforcing material containing a covering layer according to an embodiment of the present invention, the resin is preferably randomly decomposed by heating.

In the reinforcing material containing a covering layer according to an embodiment of the present invention, the resin is more preferably an epoxy resin.

In the reinforcing material containing a covering layer according to an embodiment of the present invention, the reinforcing material is preferably recovered from reinforced plastic or prepreg.

A method of producing a reinforcing material containing a covering layer according to an embodiment of the present invention includes a step of heating a resin to generate a vaporized material and a step of bringing the vaporized material into contact with a reinforcing material in the absence of superheated steam to form a covering layer on a surface of the reinforcing material.

A method of producing a reinforcing material containing a covering layer according to an embodiment of the present invention includes a heating step of heating a molded article containing a resin and a reinforcing material to remove the resin and perform a heat treatment, thus obtaining the reinforcing material having the resin removed; a recovering step of recovering a vaporized material of the resin produced in the heating step; and a forming step of bringing the vaporized material into contact with the reinforcing material obtained in the heating step in the absence of superheated steam to form a covering layer on a surface of the reinforcing material.

An apparatus for producing a reinforcing material containing a covering layer according to an embodiment of the present invention includes a heating unit that heats a molded article containing a resin and a reinforcing material to remove the resin and perform a heat treatment, thus obtaining the reinforcing material having the resin removed; a recovery unit that recovers a vaporized material of the resin produced when the resin is subjected to a heat treatment to be removed; and a covering layer forming unit that brings the vaporized material into contact with the reinforcing material obtained in the heating unit in the absence of superheated steam to form a covering layer on a surface of the reinforcing material.

Embodiments of the present invention will be described in further detail hereinafter using examples. The present invention is of course not limited to the examples below, and it goes without saying that various aspects are possible for the details. Furthermore, the present invention is not limited to the embodiments described above, and various modifications are possible within the scope indicated in the claims. Embodiments obtained by appropriately combining the technical means disclosed by the embodiments are also included in the technical scope of the present invention. In addition, all of the documents described in the present specification are herein incorporated by reference.

[Examples]

As described below, a reinforcing material containing a covering layer was prepared using various resins and reinforcing materials, and confirmation tests of interfacial shear strength, appearance, bending modulus of elasticity, and flexural strength were performed. Before the description of the specific examples, a solvolysis method when recovering carbon fibers from CFRP, a superheated steam method (SHS method), a thermolysis method, and a method for determining covering condition, and measuring the interfacial shear strength, the bending modulus of elasticity, and the flexural strength will be described.

(Solvolysis method)

CFRP, diethylene glycol monomethyl ether, and tripotassium phosphate n-hydrate dehydrated product were adjusted to have a weight ratio of 1:80:6 to obtain a mixture. A treatment was carried out in an eggplant-shaped flask equipped with a reflux condenser in an oil bath heated to 190°C for 10 hours. The carbon fibers separated by the treatment were washed with acetone to obtain carbon fibers.

(Superheated steam method)

The CFRP was placed on a superheated steam treatment apparatus and subjected to a treatment at 550°C for one hour to obtain carbon fibers.

(Thermolysis method)

The CFRP was placed in a muffle furnace and heated from room temperature to 600°C at 20°C/min, and after treatment at 600°C for 15 min, the mixture was cooled to obtain carbon fibers.

(Determination of covering condition)

The appearance change such as glossiness was visually checked, and the covering condition on the carbon fibers was determined. In a case where the glossiness was observed in the obtained carbon fibers, it was determined that the covering was made on the carbon fibers.

(Measurement of interfacial shear strength)

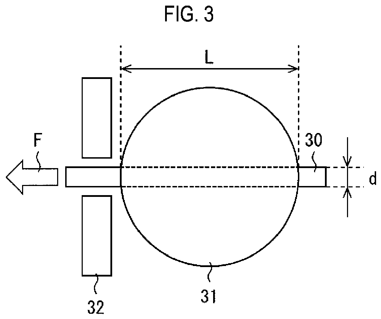

A method for measuring interfacial shear strength will be described with reference to FIG. 3. As illustrated in FIG. 3, carbon fibers 30 were covered with an epoxy resin using microsyringe, and the covering epoxy resin was cured to form a microdroplet 31. One end of the carbon fibers 30 on which the microdroplet 31 was formed were placed in an interfacial shear strength measurement device (available from Tohei Sangyo Corporation.) so as to pass between blades 32 included in the interfacial shear strength measurement device. The carbon fiber 30 was pulled, and a pull-out load F was measured when the carbon fiber 30 was pulled out of the microdroplet 31 by the blade 32. The interfacial shear strength was calculated by substituting the measured pull-out load into Equation (1) below.

$$\tau = F/d\pi L \ldots (1)$$

$\tau$: Interfacial shear strength
F: Pull-out load
d: Fiber diameter
L: Droplet length

(Measurement of bending modulus of elasticity and flexural strength)

The carbon fiber and polypropylene were melt-kneaded at 180°C with LABO PLASTOMILL (available from Toyo Seiki Seisaku-sho, Ltd.) to obtain a carbon fiber-polypropylene composite having a carbon fiber content of 20 wt%. A carbon fiber-polypropylene composite plate with a thickness of 2 mm was produced by pressing a carbon fiber-polypropylene composite at 190°C.
The bending modulus of elasticity and the flexural strength were measured using the prepared carbon fiber-polypropylene composite plate. The bending modulus of elasticity and the flexural strength were measured in accordance with JIS K7171.

[Example 1]

(Preparation of carbon fiber containing covering layer)

0.1 g of commercially available CFRP (epoxy resin type: hereinafter, CFRP-A) was provided at a bottom of a magnetic crucible, and 0.02 g of carbon fiber (available from Mitsubishi Rayon) was placed on a wire mesh provided at a top of CFRP-A, covered with a lid, and provided in a muffle furnace. The temperature of the muffle furnace was raised from room temperature to 500°C at 20°C/min and held at 500°C for 15 minutes for covering treatment. After the treatment, the resultant was cooled to obtain the carbon fiber containing a covering layer.

(Confirmation of presence of covering layer, Measurement of interfacial shear strength)

As a result of visually determining the covering condition of the carbon fiber containing a covering layer obtained by performing the covering layer forming treatment, it was confirmed that the glossiness was observed on the surface of the carbon fiber and the covering was performed on the carbon fiber. In addition, the measurement was performed on the interfacial shear strength using the obtained carbon fiber containing a covering layer and the carbon fiber before performing the covering layer forming treatment. The results are shown in Table 1.

[Example 2]

A carbon fiber containing a covering layer was prepared in the same manner as in Example 1 except that the carbon fiber was changed to a carbon fiber obtained from a commercially available CFRP (epoxy resin type: hereinafter, CFRP-B) by using a solvolysis method.

As a result of determining the covering condition of the carbon fiber containing a covering layer obtained, it was confirmed that the covering was performed on the carbon fiber. In addition, the measurement was performed on the interfacial shear strength using the obtained carbon fiber containing a covering layer and the carbon fiber before performing the covering layer forming treatment. The results are shown in Table 1.

[Example 3]

A carbon fiber containing a covering layer was prepared in the same manner as in Example 1 except that the carbon fiber was changed from CFRP-B to a carbon fiber obtained by using a SHS method.

As a result of determining the covering condition of the carbon fiber containing a covering layer obtained, it was confirmed that the covering was performed on the carbon fiber. In addition, the measurement was performed on the interfacial shear strength using the obtained carbon fiber containing a covering layer and the carbon fiber before performing the covering layer forming treatment. The results are shown in Table 1.

[Example 4]

A carbon fiber containing a covering layer was prepared in the same manner as in Example 1 except that the carbon fiber was changed to a carbon fiber obtained from CFRP (epoxy resin type: hereinafter, CFRP-C) by using a SHS method.

As a result of determining the covering condition of the carbon fiber containing a covering layer obtained, it was confirmed that the covering was performed on the carbon fiber. In addition, the measurement was performed on the interfacial shear strength using the obtained carbon fiber containing a covering layer and the carbon fiber before performing the covering layer forming treatment. The results are shown in Table 1.

[Example 5]

A carbon fiber containing a covering layer was prepared in the same manner as in Example 1 except that the carbon fiber was changed to a carbon fiber obtained from CFRP (available from Toray Industries, Inc., epoxy resin type: hereinafter, CFRP-D) by using a solvolysis method.

As a result of determining the covering condition of the carbon fiber containing a covering layer obtained, it was confirmed that the covering was performed on the carbon fiber. In addition, the measurement was performed on the interfacial shear strength using the obtained carbon fiber containing a covering layer and the carbon fiber before performing the covering layer forming treatment. The results are shown in Table 1.

[Example 6]

A carbon fiber containing a covering layer was prepared in the same manner as in Example 1 except that the carbon fiber was changed from CFRP-D to a carbon fiber obtained by using a thermolysis method.

As a result of determining the covering condition of the carbon fiber containing a covering layer obtained, it was confirmed that the covering was performed on the carbon fiber. In addition, the measurement was performed on the interfacial shear strength using the obtained carbon fiber containing a covering layer and the carbon fiber before performing the covering layer forming treatment. The results are shown in Table 1.

[Example 7]

A carbon fiber containing a covering layer was prepared in the same manner as in Example 1 except that the carbon fiber was changed to a carbon fiber obtained from CFRP (available from Mitsubishi Rayon Co., Ltd., epoxy resin type: hereinafter, CFRP-E) by using a thermolysis method.

As a result of determining the covering condition of the carbon fiber containing a covering layer obtained, it was confirmed that the covering was performed on the carbon fiber. In addition, the measurement was performed on the interfacial shear strength using the obtained carbon fiber containing a covering layer and the carbon fiber before performing the covering layer forming treatment. The results are shown in Table 1.

Table 1

| | Sample | Recovery method | Interfacial shear strength (MPa) | | Interfacial shear strength increase rate (%) |
|---|---|---|---|---|---|
| | | | Before treatment | After treatment | |
| Example 1 | CF | | 22.3 | 34.8 | 56 |
| Example 2 | CFRP-B | Solvolysis method | 24.8 | 36.3 | 46 |
| Example 3 | CFRP-B | SHS method | 33.3 | 41.4 | 24 |
| Example 4 | CFRP-C | SHS method | 21.7 | 46.5 | 114 |
| Example 5 | CFRP-D | Solvolysis method | 35.6 | 42.3 | 19 |
| Example 6 | CFRP-D | Thermolysis method | 37.3 | 41.7 | 12 |
| Example 7 | CFRP-E | Thermolysis method | 47.5 | 52.9 | 11 |

As indicated in Table 1, it was observed that the carbon fibers on which the covering layer was formed had higher interfacial shear strength than the untreated carbon fibers.

[Example 8]

A carbon fiber containing a covering layer was prepared in the same manner as in Example 1 except that polypropylene (PP) was used instead of CFRP and the treatment temperature was changed to 450°C.
As a result of determining the covering condition of the carbon fiber containing a covering layer obtained, it was confirmed that the covering was performed on the carbon fiber.

[Example 9]

A carbon fiber containing a covering layer was prepared in the same manner as in Example 8 except that nylon 6 (Ny6) was used instead of PP.
As a result of determining the covering condition of the carbon fiber containing a covering layer obtained, it was confirmed that the covering was performed on the carbon fiber.

[Example 10]

A carbon fiber containing a covering layer was prepared in the same manner as in Example 8 except that polycaprolactone (PCL) was used instead of PP.
As a result of determining the covering condition of the carbon fiber containing a covering layer obtained, it was confirmed that the covering was performed on the carbon fiber.

[Example 11]

A carbon fiber containing a covering layer was prepared in the same manner as in Example 8 except that polysulfone (PSu) was used instead of PP and the treatment temperature was changed to 550°C.
As a result of determining the covering condition of the carbon fiber containing a covering layer obtained, it was confirmed that the covering was performed on the carbon fiber.

[Example 12]

A carbon fiber containing a covering layer was prepared in the same manner as in Example 11 except that a polyphenylene sulfide resin (PPS) was used instead of PSu.
As a result of determining the covering condition of the carbon fiber containing a covering layer obtained, it was confirmed that the covering was performed on the carbon fiber.

[Example 13]

A carbon fiber containing a covering layer was prepared in the same manner as in Example 8 except that polyether sulfone (PES) was used instead of PP and the treatment temperature was changed to 575°C.

As a result of determining the covering condition of the carbon fiber containing a covering layer obtained, it was confirmed that the covering was performed on the carbon fiber.

[Example 14]

A carbon fiber containing a covering layer was prepared in the same manner as in Example 8 except that a polyphenylsulfone resin (PPSu) was used instead of PP and the treatment temperature was changed to 600°C.

As a result of determining the covering condition of the carbon fiber containing a covering layer obtained, it was confirmed that the covering was performed on the carbon fiber.

[Example 15]

A carbon fiber containing a covering layer was prepared in the same manner as in Example 14 except that polyether ether ketone (PEEK) was used instead of PPSu.

As a result of determining the covering condition of the carbon fiber containing a covering layer obtained, it was confirmed that the covering was performed on the carbon fiber.

[Example 16]

A carbon fiber containing a covering layer was prepared in the same manner as in Example 8 except that high density polyethylene (HDPE) was used instead of PP.

As a result of determining the covering condition of the carbon fiber containing a covering layer obtained, it was confirmed that the covering was performed on the carbon fiber.

[Example 17]

A carbon fiber containing a covering layer was prepared in the same manner as in Example 1 except that polycarbonate (PC) was used instead of CFRP.

As a result of determining the covering condition of the carbon fiber containing a covering layer obtained, it was confirmed that the covering was performed on the carbon fiber.

[Example 18]

A carbon fiber containing a covering layer was prepared in the same manner as in Example 1 except that polyethylene terephthalate (PET) was used instead of CFRP.

As a result of determining the covering condition of the carbon fiber containing a covering layer obtained, it was confirmed that the covering was performed on the carbon fiber.

[Example 19]

A carbon fiber containing a covering layer was prepared in the same manner as in Example 1 except that nylon 11 (Ny11) was used instead of CFRP.

As a result of determining the covering condition of the carbon fiber containing a covering layer obtained, it was confirmed that the covering was performed on the carbon fiber.

[Example 20]

A carbon fiber containing a covering layer was prepared in the same manner as in Example 1 except that the glass fiber was used instead of carbon fiber and the treatment temperature was changed to 450°C.

As a result of determining the covering condition of the glass fiber containing a covering layer obtained, it was confirmed that the covering was performed on the glass fiber.

[Example 21]

A stainless fiber containing a covering layer was prepared in the same manner as in Example 20 except that a stainless fiber was used instead of the glass fiber.

As a result of determining the covering condition of the stainless fiber containing a covering layer obtained, it was confirmed that the covering was performed on the stainless fiber.

[Example 22]

A calcium carbonate containing a covering layer was prepared in the same manner as in Example 20 except that calcium carbonate was used instead of the glass fiber and calcium carbonate was placed in an aluminum container without a lid and provided on a wire mesh.
As a result of determining the covering condition of calcium carbonate containing a covering layer obtained, it was confirmed that the covering was performed on the calcium carbonate.

[Comparative Example 1]

A carbon fiber containing a covering layer was prepared in the same manner as in Example 1 except that polymethyl methacrylate (PMMA) was used instead of CFRP.
As a result of determining the covering condition of the carbon fiber obtained, it was confirmed that the covering was not performed on the carbon fiber.

[Example 23]

A commercially available carbon fiber prepreg excluding the cover film and release paper (weight ratio of CF/resin is approximately 70/30) was placed in a muffle furnace, the temperature was raised from room temperature to 620°C at 20°C/min under a nitrogen gas stream, treated at 620°C for one hour, and then cooled to obtain carbon fibers.
A carbon fiber containing a covering layer was prepared in the same manner as in Example 1 except that the carbon fiber subjected to a covering layer forming treatment was changed to carbon fiber obtained from the carbon fiber prepreg.
As a result of determining the covering condition of the carbon fiber containing a covering layer obtained, it was confirmed that the covering was performed on the carbon fiber. In addition, the measurement was performed on the interfacial shear strength using the obtained carbon fiber containing a covering layer and the carbon fiber before performing the covering layer forming treatment. Note that, in this example, the measurement of the interfacial shear strength was performed in the same manner as in Example 1 except that polypropylene (PP) was used instead of the epoxy resin for the microdroplet 31. The microdroplet 31 was formed by melting polypropylene (PP) at 190°C. The results are shown in Table 2.

[Table 2]

| | Interfacial shear strength (MPa) | | Interfacial shear strength increase rate (%) |
| --- | --- | --- | --- |
| | Before treatment | After treatment | |
| Example 23 | 5.2 | 7.6 | 46 |

As indicated in Table 2, it was observed that the carbon fibers on which the covering layer was formed had higher interfacial shear strength than the untreated carbon fibers.

[Example 24]

A carbon fiber containing a covering layer was prepared in the same manner as in Example 23 except that polypropylene (PP) was used instead of CFRP and the treatment temperature was changed to 450°C. As a result of determining the covering condition of the carbon fiber containing a covering layer obtained, it was confirmed that the covering was performed on the carbon fiber.
The measurement was performed in the same manner as in Example 23 on the interfacial shear strength using the obtained carbon fiber containing a covering layer and the carbon fiber before performing the covering layer forming treatment. The results are shown in Table 3.

[Table 3]

| | Interfacial shear strength (MPa) | | Interfacial shear strength increase rate (%) |
|---|---|---|---|
| | Before treatment | After treatment | |
| Example 24 | 5.2 | 7.7 | 48 |

As indicated in Table 3, it was observed that the carbon fibers on which the covering layer was formed had higher interfacial shear strength than the untreated carbon fibers.

[Example 25]

A CFRP waste (epoxy resin base, carbon fiber content of approximately 65%) was placed in a muffle furnace and heated to 620°C at 20°C/min from room temperature under a nitrogen gas stream, treated at 620°C for one hour, and then cooled to obtain carbon fibers.

A carbon fiber containing a covering layer was prepared in the same manner as in Example 24 except that the carbon fiber subjected to the covering layer forming treatment was changed to 3.7 g of carbon fiber obtained from the CFRP waste, and the amount of polypropylene (PP) was changed to 0.2 g. As a result of determining the covering condition of the carbon fiber containing a covering layer obtained, it was confirmed that the covering was performed on the carbon fiber. The carbon fiber containing a covering layer was obtained by repeating this treatment.

The bending modulus of elasticity and the flexural strength were measured by using the obtained carbon fiber containing a covering layer and the carbon fiber before performing the covering layer forming treatment. The results are shown in Table 4.

[Table 4]

| | Bending modulus of elasticity (MPa) | | Flexural strength (MPa) | |
|---|---|---|---|---|
| | Before treatment | After treatment | Before treatment | After treatment |
| Example 25 | 2480 | 3260 | 24.7 | 27.1 |

As indicated in Table 4, it was observed that the carbon fibers on which the covering layer was formed had higher bending modulus of elasticity and flexural strength than the untreated carbon fibers. In Example 24, it has been confirmed that by covering the carbon fibers with polypropylene (PP), the interfacial shear strength is improved, that is, the interfacial adhesion is improved. Therefore, together with the results of Example 25, it was confirmed that the improvement of the interfacial adhesion brings about the improvement of the bending modulus of elasticity and the flexural strength, which are practically mechanical physical properties.

[Industrial Applicability]

The present invention can be used for a fiber reinforced resin composite material.

[Reference Signs List]

1, 2 Producing apparatus
10 Transport device
11 Tunnel furnace (heating unit, covering layer forming unit)
11a to 11g Section
14a to 14g Control valve
12, 21 Recovery line (recovery unit)
13, 23 Exhaust gas path
20 Resin heating furnace (heating unit)
22 Covering layer forming furnace (covering layer forming unit)
24, 25 Valve

**Claims**

1. A reinforcing material containing a covering layer comprising:

   a reinforcing material that imparts strength to a matrix resin by being combined with the matrix resin; and
   a covering layer formed on a surface of the reinforcing material,
   wherein the covering layer is formed of a vaporized material generated by heating the resin.

2. The reinforcing material containing a covering layer according to claim 1, wherein the reinforcing material has a spherical shape, a flat plate shape, a fibrous shape, or a needle shape.

3. The reinforcing material containing a covering layer according to claim 1 or 2, wherein the reinforcing material is an inorganic material.

4. The reinforcing material containing a covering layer according to any one of claims 1 to 3, wherein the reinforcing material is a carbon fiber.

5. The reinforcing material containing a covering layer according to any one of claims 1 to 4, wherein the resin is randomly decomposed by heating.

6. The reinforcing material containing a covering layer according to any one of claims 1 to 5, wherein the resin is an epoxy resin.

7. The reinforcing material containing a covering layer according to any one of claims 1 to 6, wherein the reinforcing material is recovered from reinforced plastic or prepreg.

8. A method of producing a reinforcing material containing a covering layer comprising:

   a step of heating a resin to generate a vaporized material; and
   a step of bringing the vaporized material into contact with a reinforcing material in the absence of superheated steam to form a covering layer on a surface of the reinforcing material.

9. A method of producing a reinforcing material containing a covering layer comprising:

   a heating step of heating a molded article containing a resin and a reinforcing material to decompose and remove the resin, thus obtaining the reinforcing material having the resin removed;
   a recovering step of recovering a vaporized material of the resin produced in the heating step; and
   a forming step of bringing the vaporized material into contact with the reinforcing material obtained in the heating step in the absence of superheated steam to form a covering layer on a surface of the reinforcing material.

10. An apparatus for producing a reinforcing material containing a covering layer comprising:

    a heating unit that heats a molded article containing a resin and a reinforcing material to remove the resin and perform a heat treatment, thus obtaining the reinforcing material having the resin removed;
    a recovery unit that recovers a vaporized material of the resin produced when the resin is subjected to a heat treatment to be removed; and
    a covering layer forming unit that brings the vaporized material into contact with the reinforcing material obtained in the heating unit in the absence of superheated steam to form a covering layer on a surface of the reinforcing material.

FIG. 1

FIG. 2

FIG. 3

## INTERNATIONAL SEARCH REPORT

| | International application No. |
| --- | --- |
| | PCT/JP2019/029165 |

**A. CLASSIFICATION OF SUBJECT MATTER**
Int.Cl.    C08J5/06(2006.01)i, B29B15/08(2006.01)i, C08J11/12(2006.01)i,
           D06M15/55(2006.01)i, D06M101/40(2006.01)n

According to International Patent Classification (IPC) or to both national classification and IPC

**B. FIELDS SEARCHED**

Minimum documentation searched (classification system followed by classification symbols)
Int.Cl.    C08J5/06, B29B15/08, C08J11/12, D06M15/55, D06M101/40

| Documentation searched other than minimum documentation to the extent that such documents are included in the fields searched | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>/Y<br>/A | JP 6-346242 A (SOCIETE EUROPEENNE DE PROPULSION)<br>20 December 1994, claims 1, 5, paragraphs [0011],<br>[0012], [0029], examples 1-4 & US 5514453 A claims<br>1, 5, column 3, lines 1-7, column 5, line 59 to<br>column 6, line 3, examples 1-4 & EP 626360 A1 | 1-5<br>/7<br>/6, 8-10 |

☒ Further documents are listed in the continuation of Box C.　　☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 30 August 2019 (30.08.2019) | 24 September 2019 (24.09.2019) |

| Name and mailing address of the ISA/<br>　　Japan Patent Office<br>　　3-4-3, Kasumigaseki, Chiyoda-ku,<br>　　Tokyo 100-8915, Japan | Authorized officer<br><br>Telephone No. |
| --- | --- |

Form PCT/ISA/210 (second sheet) (January 2015)

**INTERNATIONAL SEARCH REPORT**

International application No.

PCT/JP2019/029165

C (Continuation). DOCUMENTS CONSIDERED TO BE RELEVANT

| Category* | Citation of document, with indication, where appropriate, of the relevant passages | Relevant to claim No. |
|---|---|---|
| Y /A | JP 2003-055475 A (HITACHI CHEMICAL INDUSTRY CO., LTD.) 26 February 2003, claim 1 (Family: none) | 7 /6, 8-10 |
| Y /A | JP 2013-199607 A (THE DOSHISHA et al.) 03 October 2013, paragraphs [0009]-[0011], [0028] (Family: none) | 7 /6, 8-10 |
| Y /A | JP 2016-521295 A (ELG CARBON FIBRE INTERNATIONAL GMBH) 21 July 2016, claims 1, 16 & US 2016/0039118 A1, claims 1, 16 & WO 2014/154703 A1 & EP 2783764 A1 & CN 105246605 A | 7 /6, 8-10 |
| A | JP 7-011045 A (HIYAMA, Yukio) 13 January 1995, paragraph [0008] (Family: none) | 6, 8-10 |
| A | JP 2000-198117 A (EBARA CORPORATION) 18 July 2000, paragraph [0068] (Family: none) | 6, 8-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58031430 B